# EUROPEAN PATENT APPLICATION

(11) **EP 4 401 201 A1**
(43) Date of publication of application: **17.07.2024**
(21) Application number: 22948211.2
(22) Date of filing: 27.06.2022
(51) Int. Cl.: H01M 10/6556, H01M 10/658

(54) **BATTERY AND ELECTRIC APPARATUS**

(71) Applicant: Contemporary Amperex Technology Co., Limited, Ningde, Fujian 352100 (CN)
(72) Inventor: LIAO, Boxiang, Ningde, Fujian 352100 (CN); CAI, Qiuhong, Ningde, Fujian 352100 (CN); SONG, Feiting, Ningde, Fujian 352100 (CN); HOU, Yuepan, Ningde, Fujian 352100 (CN); HUANG, Xiaoteng, Ningde, Fujian 352100 (CN); CHEN, Zhiming, Ningde, Fujian 352100 (CN)
(74) Representative: von Tietzen und Hennig, Nikolaus
(86) International application number: PCT/CN2022/101395
(87) International publication number: WO 2024/000086

(57) **Abstract**

Embodiments of the present application provide a battery and a power consuming device. The battery includes a battery cell and a thermal management component. The thermal management component is configured to exchange heat with the battery cell. The thermal management component is provided with an avoidance structure configured to provide a space for expansion of the battery cell. The thermal management component can exchange heat with the battery cell to effectively manage heat of the battery cell, such that the battery cell operates within a proper temperature range, improving the cycling performance of the battery. The thermal management component is provided with the avoidance structure to provide the space for expansion of the battery cell, thereby reducing pressure between the battery cell and the thermal management component, reducing the risk of breakage of the thermal management component, improving the cycling performance of the battery cell, and improving the safety.

## Description

### Technical Field

The present application relates to the technical field of batteries, and in particular to a battery and a power consuming device.

### Background Art

Batteries are widely used in electronic devices, such as mobile phones, notebook computers, electric mopeds, electric vehicles, electric aircraft, electric ships, electric toy vehicles, electric toy ships, electric toy aircrafts, and electric tools.

In the development of battery technology, how to improve the cycling performance of batteries is a research direction in the battery technology.

### Summary of the Invention

The present application provides a battery and a power consuming device, which can improve cycling performance.

In a first aspect, an embodiment of the present application provides a battery, including a battery cell and a thermal management component. The thermal management component is configured to exchange heat with the battery cell. The thermal management component is provided with an avoidance structure configured to provide a space for expansion of the battery cell.

In the technical solution described above, the thermal management component can exchange heat with the battery cell to effectively manage heat of the battery cell, such that the battery cell operates within a proper temperature range, improving the cycling performance of the battery. The thermal management component is provided with the avoidance structure to provide the space for expansion of the battery cell, thereby reducing pressure between the battery cell and the thermal management component, reducing the risk of breakage of the thermal management component, improving the cycling performance of the battery cell, and improving the safety.

In some implementations, a plurality of battery cells are provided, and at least part of the avoidance structure is located between two adjacent battery cells and is configured to provide a space for expansion of at least one of the battery cells.

In the technical solution described above, at least part of the thermal management component is located between two adjacent battery cells, such that the thermal management component can exchange heat with the two battery cells, thereby improving the heat exchange efficiency, and improving the uniformity of temperatures of the battery cells on two sides of the thermal management component. The avoidance structure can provide the space for expansion of at least one of the battery cells, thereby reducing pressure between the battery cell and the thermal management component, reducing the risk of breakage of the thermal management component, improving the cycling performance of the battery cell, and improving the safety.

In some implementations, the avoidance structure is configured to provide a space for expansion of the battery cells located on two sides of the thermal management component and adj acent to the thermal management component, thereby further reducing pressure between the battery cell and the thermal management component, reducing the risk of breakage of the thermal management component, improving the cycling performance of the battery cell, and improving the safety.

In some implementations, the thermal management component further includes a first surface and a second surface that are arranged facing away from each other in a first direction, the battery cell being connected to the first surface.

In some implementations, the avoidance structure includes a first recess, the first recess being recessed from the first surface in a direction close to the second surface, and the first recess being configured to provide a space for expansion of the battery cell connected to the first surface.

In the technical solution described above, the first recess is provided, such that a contact area between the first surface and the battery cell can be reduced; and when the battery cell expands, the first recess can provide the space for expansion of the battery cell, and reduce a portion of the thermal management component that is pressed by the battery cell, thereby reducing pressure between the battery cell and the thermal management component, reducing the risk of breakage of the thermal management component, improving the cycling performance of the battery cell, and improving the safety.

In some implementations, the thermal management component includes a first plate and a second plate that are arranged in the first direction, where the first plate includes a first main body and a first protrusion, the first protrusion protrudes from a surface of the first main body facing away from the second plate, a second recess is provided on the side of the first plate facing the second plate, the second recess is formed at the position on the first plate corresponding to the first protrusion, and the second recess is configured to allow a heat exchange medium to flow. The first surface includes an end surface of the first protrusion away from the first main body, and the first protrusion and the first main body form the first recess.

In the technical solution described above, the heat exchange medium can flow in the second recess to exchange heat with the battery cell by means of the first protrusion. The first protrusion of the first plate can be formed by means of stamping, and after stamping, the second recess is formed on the side of the first plate facing the second plate, and the first recess is formed on the side of the first plate facing away from the second plate. According to the technical solution described above, a forming process of the thermal management component can be simplified.

In some implementations, the battery cell is connected to the second surface. The avoidance structure further includes a third recess, the third recess being recessed from the second surface in a direction close to the first surface, and the third recess isbeing configured to provide a space for expansion of the battery cell connected to the second surface.

In the technical solution described above, the first recess can provide the space for expansion of the battery cell connected to the first surface, and the third recess can provide the space for expansion of the battery cell connected to the second surface, thereby reducing pressure between the battery cell and the thermal management component, reducing the risk of breakage of the thermal management component, improving the cycling performance of the battery cell, and improving the safety.

In some implementations, a projection of a bottom surface of the first recess in the first direction at least partially overlaps a projection of a bottom surface of the third recess in the first direction.

In some implementations, the projection of the bottom surface of the first recess in the first direction completely coincides with the projection of the bottom surface of the third recess in the first direction, so as to oppositely arrange the first recess and the second recess in the first direction, such that the uniformity of force on the battery cells located on two sides of the thermal management component can be improved.

In some implementations, the avoidance structure further includes a first through hole, rhe first through hole extending from the bottom surface of the first recess to the bottom surface of the third recess, so as to communicate the first recess with the third recess. The first through hole is provided, such that the avoidance space can be further increased, and a difference in expansion of the battery cells on two sides of the thermal management component can be balanced.

In some implementations, the avoidance structure further includes a first through hole, the first through hole extending from a bottom surface of the first recess to the second surface.

In the technical solution described above, when the battery cell connected to the second surface expands, an expanded portion of the battery cell can enter the first recess via the first through hole. The first recess can also provide the space for expansion of the battery cell connected to the second surface, thereby reducing pressure between the battery cell and the thermal management component, reducing the risk of breakage of the thermal management component, improving the cycling performance of the battery cell, and improving the safety.

In some implementations, the avoidance structure includes a second through hole, the second through hole extendsing from the first surface to the second surface, so as to penetrate the thermal management component. The second through hole can provide a space for expansion of the battery cell connected to the first surface and a space for expansion of the battery cell connected to the second surface, thereby reducing pressure between the battery cell and the thermal management component, reducing the risk of breakage of the thermal management component, improving the cycling performance of the battery cell, and improving the safety.

In some implementations, the thermal management component is internally provided with a flow channel for the heat exchange medium to flow, and the flow channel surrounds the avoidance structure.

In some implementations, the battery further includes a thermal insulator, where at least part of the thermal insulator is accommodated in the avoidance structure, and the thermal insulator has a thermal conductivity less than that of the thermal management component. When the battery cell connected to the thermal management component is in a state of thermal runaway, the thermal insulator can function as thermal insulation protection to prevent rapid diffusion of heat, so as to reduce safety risks.

In some implementations, the thermal insulator has a Young's modulus less than that of the thermal management component. The thermal insulator has a better elasticity than the thermal management component. When the battery cell expands and is pressed against the thermal insulator, the thermal insulator can be compressed to provide a space for expansion of the battery cell, thereby reducing force on the battery cell, and improving the cycling performance of the battery cell.

In some implementations, a material of the thermal insulator includes at least one of aerogel, a glass fiber and a ceramic fiber.

In some implementations, the thermal insulator is fixed to the battery cell, so as to reduce shaking of the thermal insulator in the avoidance structure, and reduce the risk of dislocation of the thermal insulator.

In some implementations, the thermal insulator is arranged separated from the thermal management component, so as to reduce heat transfer between the thermal insulator and the thermal management component and reduce heat loss.

In some implementations, the thermal insulator is located between adjacent battery cells. The thermal insulator can reduce heat transfer between the battery cells and reduce the influence of the battery cells on each other.

In some implementations, the battery includes a plurality of battery units arranged in the first direction, where each of the battery units includes the plurality of battery cells arranged in a second direction perpendicular to the first direction. The thermal management component is arranged between at least two adjacent battery units.

According to the technical solution described above, the thermal management component exchanges heat with the plurality of battery cells of the battery unit, so as to improve the heat exchange efficiency, improve the uniformity of temperatures of the plurality of battery cells of the battery unit, reduce the number of thermal management components, simplify a structure of the battery, and increase the energy density of the battery.

In some implementations, the avoidance structure is located between adjacent battery units and is configured to provide a space for expansion of the plurality of battery cells of the battery unit. The avoidance structure can provide the space for expansion of the plurality of battery cells of the battery unit, thereby reducing pressure between the plurality of battery cells and the thermal management component, reducing the risk of breakage of the thermal management component, reducing a difference in force on the plurality of battery cells of the battery unit, and improving the cycling performance of the battery cells.

In some implementations, the battery cell includes two third surfaces arranged opposite each other in the first direction and two fourth surfaces arranged opposite each other in the second direction., where the third surface has an area greater than that of the fourth surface, and the first direction is perpendicular to the second direction. The thermal management component is configured to exchange heat with the third surface of the battery cell. Heat exchange between the thermal management component and the third surface of the battery cell having a larger area can increase a heat exchange area between the thermal management component and the battery cell, and improve the heat exchange efficiency.

In some implementations, a heat exchange area between the thermal management component and the third surface is S1, the third surface has an area of S2, and S1/S2 ≥ 0.2.

According to the technical solution described above, the heat exchange efficiency between the thermal management component and the battery cell can satisfy the requirements, and the cycling performance of the battery cell can be improved.

In a second aspect, an embodiment of the present application provides a power consuming device, including a battery according to any one of the implementations of the first aspect, where the battery is configured to provide electrical energy.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can also be obtained from the accompanying drawings without involving any inventive effort.
FIG. 1 is a schematic structural diagram of a vehicle according to some embodiments of the present application;
FIG. 2 is a schematic exploded view of a battery according to some embodiments of the present application;
FIG. 3 is a schematic structural diagram of a battery according to some embodiments of the present application;
FIG. 4 is a schematic exploded view of part of the battery shown; and
FIG. 5 is a partial schematic sectional view of a battery according to some embodiments of the present application;
FIG. 6 is a schematic diagram of a thermal management component shown in FIG. 4;
FIG. 7 is a schematic sectional view of the thermal management component shown in FIG. 6 taken along line A-A;
FIG. 8 is a schematic sectional view of a thermal management component of a battery according to some other embodiments of the present application;
FIG. 9 is a schematic sectional view of a thermal management component of a battery according to some other embodiments of the present application;
FIG. 10 is a partial schematic sectional view of a battery according to some other embodiments of the present application;
FIG. 11 is a schematic enlarged view of the battery shown in FIG. 3 at circle B;
FIG. 12 is a schematic structural diagram of a battery unit and a thermal management component of a battery according to some embodiments of the present application; and
FIG. 13 is a schematic structural diagram of a battery cell of a battery according to some embodiments of the present application.

Reference signs in detailed description of embodiments are as follows.

1. Vehicle; 2. Battery; 3. Controller; 4. Motor; 5. Case; 5a. First case part; 5b. Second case part; 5c. Accommodation space; 6. Battery module; 10. Battery cell; 11. Third surface; 11a. First region; 11b. Second region; 12. Fourth surface; 13. Fifth surface; 20. Thermal management component; 21. Avoidance structure; 211. First recess; 211a. Bottom surface of first recess; 212. Third recess; 212a. Bottom surface of third recess; 213. First through hole; 214. Second through hole; 22. First plate; 221. First main body; 222. First protrusion; 223. Second recess; 23. Second plate; 231. Second main body; 232. Second protrusion; 233. Fourth recess; 24. Flow channel; 241. Heat exchange section; 242. Confluence section; 25. First interface; 26. Second interface; 27. Connecting pipe; 20a. First surface; 20b. Second surface; 30. Thermal insulator; 40. Battery unit; X. First direction; Y. Second direction; Z. Third direction.

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. Apparently, the embodiments described are some of, rather than all of, the embodiments of the present application. All other embodiments obtained by those of ordinary skill in the art on the basis of the embodiments of the present application without involving any inventive effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the accompanying drawings described above are used to distinguish between different objects, rather than describing a specific order or a primary-secondary relationship.

Reference to an "embodiment" in the present application means that a specific feature, structure or characteristic described in conjunction with an embodiment may be included in at least one embodiment of the present application. The appearance of this phrase in various places in the specification does not necessarily mean the same embodiment, nor is it an independent or alternative embodiment mutually exclusive with other embodiments.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference signs denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

The phrase "plurality of" appearing in the present application means two or more (including two).

The term "parallel" in the present application not only includes situations of absolute parallelism, but also includes situations of general parallelism conventionally recognized in engineering. Moreover, the term "perpendicular" not only includes situations of absolute perpendicularity, but also includes situations of general perpendicularity conventionally recognized in engineering.

In the present application, a battery cell may include a lithium-ion battery cell, a lithium-sulfur battery cell, a sodium-lithium-ion battery cell, a sodium-ion battery cell, a magnesium-ion battery cell, etc., which is not limited in the embodiment of the present application.

A battery mentioned in embodiments of the present application refers to a single physical module which includes a plurality of battery cells to provide a higher voltage and capacity. Generally, the battery may include a case for packaging one or more battery cells. The case may prevent liquid or other foreign objects from affecting charging or discharging of the battery cell.

The battery cell includes an electrode assembly and an electrolyte. The electrode assembly includes a positive electrode plate, a negative electrode plate and a separator. The battery cell operates primarily by moving metal ions between the positive electrode plate and the negative electrode plate. The positive electrode plate includes a positive current collector and a positive active material layer. A surface of the positive current collector is coated with the positive active material layer. The positive current collector comprises a positive current collecting portion and a positive tab, the positive current collecting portion being coated with the positive active material layer, and the positive tab being not coated with the positive active material layer. Taking a lithium-ion battery as an example, the positive current collector may be made of aluminum, and the positive active material layer includes a positive active material which may be lithium cobalt oxides, lithium iron phosphate, ternary lithium, lithium manganate, etc. The negative electrode plate includes a negative current collector and a negative active material layer. A surface of the negative current collector is coated with the negative active material layer. The negative current collector includes a negative current collecting portion and a negative tab, the negative current collecting portion being coated with the negative active material layer, and the negative tab being not coated with the negative active material layer. The negative current collector may be made of copper, and the negative active material layer includes a negative active material which may be carbon, silicon, etc. The separator may be made of polypropylene (PP), polyethylene (PE), etc.

A battery presents different electrical cycling performance at different ambient temperatures. When the ambient temperature is too high or too low, the cycling performance of the battery may be reduced, and even the service life of the battery may be shortened. In order to ensure the safety, stable performance, and excellent operation of a new- energy vehicle, heat of the battery must be effectively managed to control the battery to always operate within a proper temperature range.

The applicant provides a thermal management component in the battery. The thermal management component may be configured to exchange heat with the battery cell of the battery to effectively manage heat of the battery, such that the battery cell operates within a proper temperature range.

The inventor noted that during charging and discharging, the battery cell of the battery is prone to expansion, and after the battery cell expands, the battery cell is pressed against the thermal management component. If pressure between the battery cell and the thermal management component is too high, the electrolyte inside the electrode assembly of the battery cell may be pressed out of the electrode assembly, thereby affecting the cycling performance of the battery cell. If the pressure exerted by the battery cell on the thermal management component is too high, the thermal management component may be deformed or even broken, causing the risk of leakage of fluid inside the thermal management component, and resulting in a safety hazard.

In view of this, an embodiment of the present application provides a technical solution, in which a thermal management component is provided with an avoidance structure to provide a space for expansion of a battery cell, thereby reducing pressure between the battery cell and the thermal management component, reducing the risk of breakage of the thermal management component, and improving the cycling performance of the battery cell.

The technical solution described in the embodiment of the present application is applicable to a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming device is not specifically limited in the embodiment of the present application.

For ease of description, an example in which the power consuming device refers to a vehicle is described in the following embodiments.

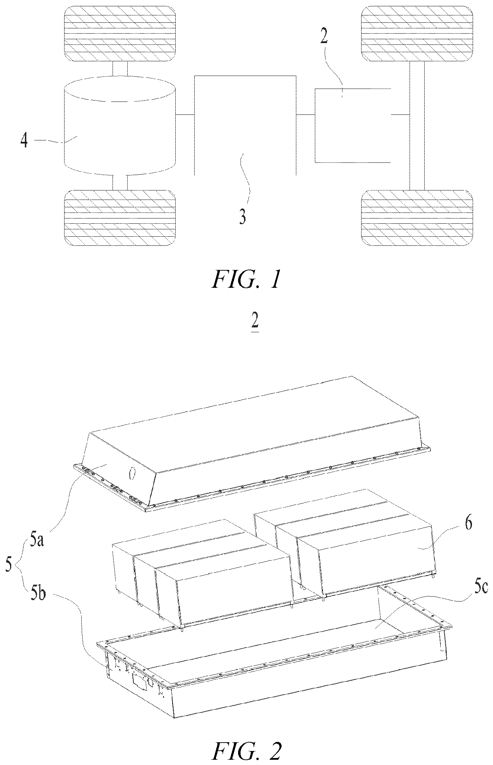

FIG. 1 is a schematic structural diagram of a vehicle according to some embodiments of the present application.

As shown in FIG. 1, a battery 2 is provided inside the vehicle 1, and the battery 2 may be arranged at a bottom, a head or a tail of the vehicle 1. The battery 2 may be configured to supply power to the vehicle 1. For example, the battery 2 may serve as a power source for operating the vehicle 1.

The vehicle 1 may further include a controller 3 and a motor 4. The controller 3 is configured to control the battery 2 to supply power to the motor 4, for example, to meet operation power requirements during starting, navigation and traveling of the vehicle 1.

In some embodiments of the present application, the battery 2 can not only serve as the power supply for operating the vehicle 1, but can also serve as a power supply for driving the vehicle 1, in place of or partially in place of fuel or natural gas, to provide driving power for the vehicle 1.

FIG. 2 is a schematic exploded view of a battery according to some embodiments of the present application.

As shown in FIG. 2, the battery 2 includes a case 5 and a battery cell (not shown in FIG. 2) accommodated in the case 5.

The case 5 is configured to accommodate the battery cell, and the case 5 may have various structures. In some embodiments, the case 5 may include a first case part 5a and a second case part 5b. The first case part 5a and the second case part 5b cover each other, and the first case part 5a and the second case part 5b jointly define an accommodation space 5c for accommodating the battery cells. The second case part 5b may be of a hollow structure with one end opened, the first case part 5a is of a platelike structure, and the first case part 5a covers the open side of the second case part 5b to form the case 5 having the accommodation space 5c. The first case part 5a and the second case part 5b each may also be of a hollow structure with one side opened, and the open side of the first case part 5 a covers the open side of the second case part 5b to form the case 5 having the accommodation space 5c. Of course, the first case part 5a and the second case part 5b may have various shapes such as a cylinder and a cuboid.

To improve the sealing performance after the first case part 5a and the second case part 5b are connected to each other, a seal, such as a sealant and a seal ring, may be also provided between the first case part 5a and the second case part 5b.

Assuming that the first case part 5a covers a top of the second case part 5b, the first case part 5a may also be referred to as an upper case cover, and the second case part 5b may also be referred to as a lower case.

In the battery 2, a plurality of battery cells are provided. The plurality of battery cells may be in series connection or parallel connection or series-parallel connection. The series-parallel connection means that some of the plurality of battery cells are in series connection and the rest are in parallel connection. The plurality of battery cells may be directly in series connection or parallel connection or series-parallel connection, and then a unit composed of the plurality of battery cells is accommodated in the case 5. Of course, the plurality of battery cells may also be first in series connection or parallel connection or series-parallel connection to form a battery module 6, and a plurality of battery modules 6 are in series connection or parallel connection or series-parallel connection to form a unit and are accommodated in the case 5.

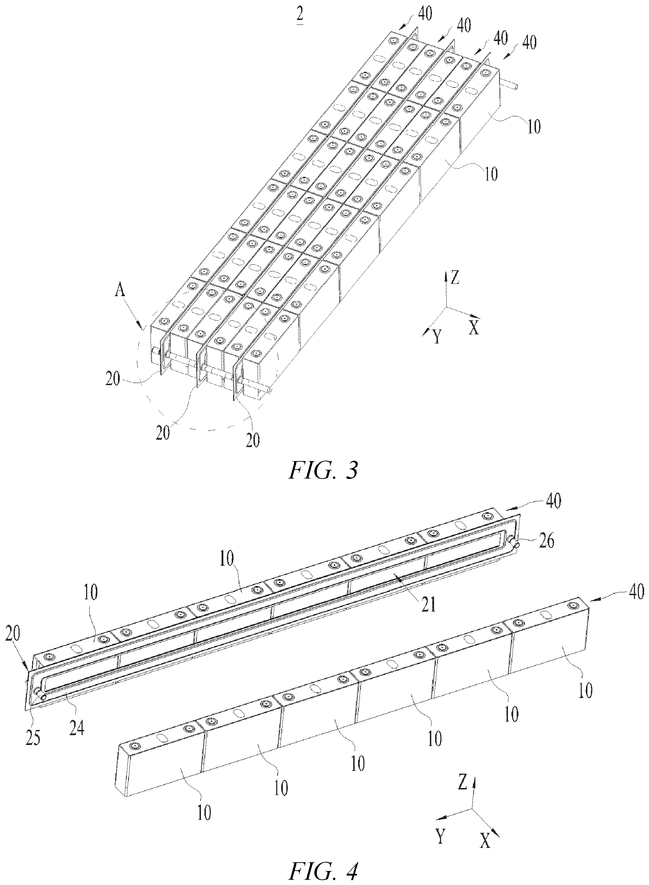

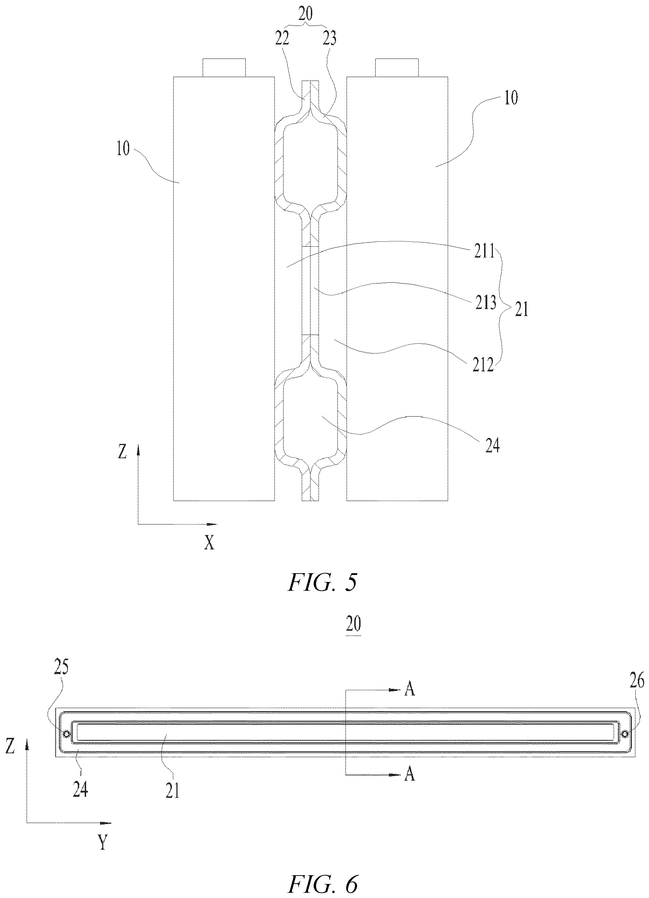

FIG. 3 is a schematic structural diagram of a battery according to some embodiments of the present application; FIG. 4 is a schematic exploded view of part of the battery shown; and FIG. 5 is a partial schematic sectional view of a battery according to some embodiments of the present application.

An embodiment of the present application provides a battery 2. The battery includes a battery cell 10 and a thermal management component 20. The thermal management component 20 is configured to exchange heat with the battery cell 10, the thermal management component 20 is provided with an avoidance structure 21, and the avoidance structure 21 is configured to provide a space for expansion of the battery cell 10.

One or more battery cells 10 may be provided. One or more thermal management components 20 may be provided. As an example, a plurality of battery cells 10 are provided, and a plurality of thermal management components 20 are provided. Each thermal management component 20 may exchange heat with one battery cell 10, or may exchange heat with two or more battery cells 10.

The thermal management component 20 may be configured to exchange heat with the battery cell 10, so as to adjust a temperature of the battery cell 10. When the temperature of the battery cell 10 is too high, the thermal management component 20 may cool the battery cell 10 to reduce the temperature of the battery cell 10. When the temperature of the battery cell 10 is too low, the thermal management component 20 may heat the battery cell 10 to increase the temperature of the battery cell 10.

A structure of the thermal management component 20 is not limited in the embodiment, as long as the thermal management component can achieve a heat exchange function. As an example, the thermal management component 20 is internally provided with a flow channel for a heat exchange medium to flow. When the heat exchange medium flows through the flow channel, the thermal management component 20 exchanges heat with the battery cell 10, so as to adjust the temperature of the battery cell 10. Optionally, the heat exchange medium may be a liquid or gas. For example, the heat exchange medium may be water.

The thermal management component 20 may be in direct contact with the battery cell 10, such that the thermal management component 20 may directly exchange heat with the battery cell 10. Alternatively, the thermal management component 20 may also be connected to the battery cell 10 by means of other thermally conductive structures (such as a thermally conductive adhesive), so as to achieve indirect heat exchange between the thermal management component 20 and the battery cell 10.

The avoidance structure 21 is a structure of the thermal management component 20 that is configured to avoid the battery cell 10 when the battery cell 10 expands. The avoidance structure 21 forms an avoidance space. When the battery cell 10 expands, at least part of an expanded portion of the battery cell 10 may enter the avoidance space. As an example, the avoidance structure 21 may include a structure such as a groove, a hole, and a notch.

The avoidance structure 21 may provide a space for expansion of one battery cell 10, or may provide a space for expansion of the plurality of battery cells 10.

One or more avoidance structures 21 may be provided, which is not limited in the embodiments of the present application.

In the embodiment of the present application, the thermal management component 20 can exchange heat with the battery cell 10 to effectively manage heat of the battery cell 10, such that the battery cell 10 operates within a proper temperature range, improving the cycling performance of the battery 2. The thermal management component 20 is provided with the avoidance structure 21 to provide the space for expansion of the battery cell 10, thereby reducing pressure between the battery cell 10 and the thermal management component 20, reducing the risk of breakage of the thermal management component 20, improving the cycling performance of the battery cell 10, and improving the safety.

In some embodiments, a plurality of battery cells 10 are provided, and at least part of the avoidance structure 21 is located between two adjacent battery cells 10 and is configured to provide a space for expansion of at least one of the battery cells 10.

The plurality of battery cells 10 may be arranged in one row or in a plurality of rows.

Two adjacent battery cells 10means that in an arrangement direction of the two battery cells 10, there are no other battery cells 10 between the two battery cells 10.

The avoidance structure 21 may provide a space for expansion of only one of the battery cells 10, or may provide a space for expansion of the two battery cells 10.

At least part of the thermal management component 20 is located between two adjacent battery cells 10, such that the thermal management component 20 can exchange heat with the two battery cells 10, thereby improving the heat exchange efficiency, and improving the uniformity of temperatures of the battery cells 10 on two sides of the thermal management component 20. The avoidance structure 21 can provide the space for expansion of at least one of the battery cells 10, thereby reducing pressure between the battery cell 10 and the thermal management component 20, reducing the risk of breakage of the thermal management component 20, improving the cycling performance of the battery cell 10, and improving the safety.

In some embodiments, the avoidance structure 21 is configured to provide a space for expansion of the battery cells 10 located on two sides of the thermal management component 20 and adjacent to the thermal management component 20.

The thermal management component 20 being adjacent to the battery cell 10 means that there are no other thermal management components 20 and no other battery cells 10 between the thermal management component 20 and the battery cell 10.

The avoidance structure 21 may provide the space for expansion of the battery cells 10 located on the two sides of the thermal management component 20, thereby further reducing pressure between the battery cell 10 and the thermal management component 20, reducing the risk of breakage of the thermal management component 20, improving the cycling performance of the battery cell 10, and improving the safety.

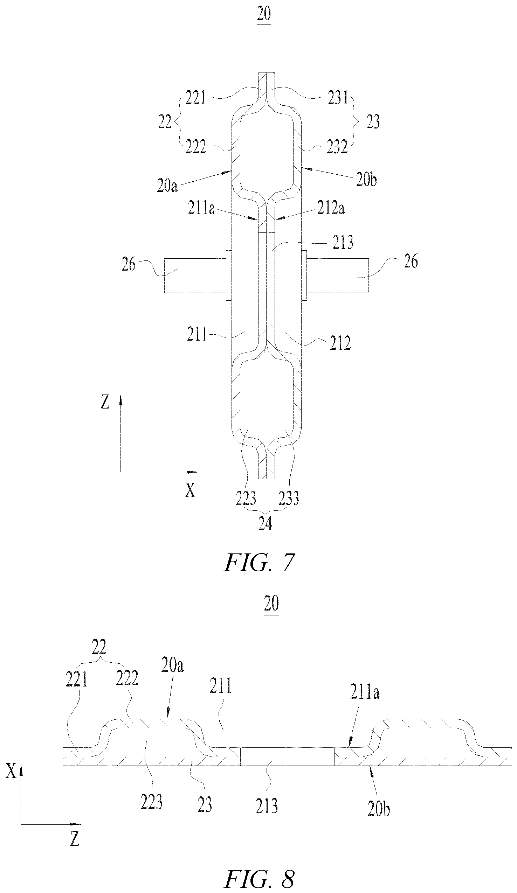

FIG. 6 is a schematic diagram of a thermal management component 20 shown in FIG. 4; and FIG. 7 is a schematic sectional view of the thermal management component 20 shown in FIG. 6 taken along line A-A.

Referring to FIGS. 4-7 together, in some embodiments, the thermal management component 20 further includes a first surface 20a and a second surface 20b that are arranged facing away from each other in a first direction X, where the battery cell 10 is connected to the first surface 20a.

The battery cell 10 connected to the first surface 20a is located on the side of the first surface 20a facing away from the second surface 20b.

The battery cell 10 may or may not be arranged on the side of the second surface 20b facing away from the first surface 20a.

The battery cell 10 may be directly connected to the first surface 20a. For example, the battery cell 10 directly abuts against the first surface 20a. Alternatively, the battery cell 10 may also be indirectly connected to the first surface 20a by means of other thermally conductive structures. For example, the battery cell 10 may be bonded to the first surface 20a by means of an thermally conductive adhesive.

The battery cell 10 may exchange heat with the first surface 20a of the thermal management component 20.

One or more battery cells 10 may be provided to be connected to the first surface 20a.

Optionally, the first surface 20a and the second surface 20b are both planar, and the first surface 20a and the second surface 20b are perpendicular to the first direction X.

In some embodiments, the avoidance structure 21 includes a first recess 211, where the first recess 211 is recessed from the first surface 20a in a direction close to the second surface 20b, and the first recess 211 is configured to provide a space for expansion of the battery cell 10 connected to the first surface 20a.

One or more first recesses 211 may be provided.

The first recess 211 may provide a space for expansion of one battery cell 10 connected to the first surface 20a, or may provide a space for expansion of a plurality of battery cells 10 connected to the first surface 20a.

In the embodiment, the first recess 211 is provided, such that a contact area between the first surface 20a and the battery cell 10 can be reduced; and when the battery cell 10 expands, the first recess 211 can provide the space for expansion of the battery cell 10, and reduce a portion of the thermal management component 20 that is pressed by the battery cell 10, thereby reducing pressure between the battery cell 10 and the thermal management component 20, reducing the risk of breakage of the thermal management component 20, improving the cycling performance of the battery cell 10, and improving the safety.

In some embodiments, the thermal management component 20 includes a first plate 22 and a second plate 23 that are arranged in the first direction X, where the first plate 22 includes a first main body 221 and a first protrusion 222, the first protrusion 222 protrudes from a surface of the first main body 221 facing away from the second plate 23, a second recess 223 is provided on the side of the first plate 22 facing the second plate 23, the second recess 223 is formed at the position on the first plate 22 corresponding to the first protrusion 222, and the second recess 223 is configured to allow the heat exchange medium to flow. The first surface 20a includes an end surface of the first protrusion 222 away from the first main body 221, and the first protrusion 222 and the first main body 221 form the first recess 211.

The first plate 22 and the second plate 23 are stacked and connected in the first direction X. As an example, the first plate 22 is welded to the second plate 23. Optionally, the first main body 221 is welded to the second plate 23.

The first main body 221 has an inner surface facing the second plate 23 and an outer surface facing away from the second plate 23. Optionally, the first main body 221 is flat, and both the inner surface and the outer surface of the first main body 221 are planar.

The second recess 223 is recessed from the inner surface of the first main body 221 in a direction away from the second plate 23. The second plate 23 is connected to the first main body 221 and covers the second recess 223.

In the embodiment, the heat exchange medium can flow in the second recess 223 to exchange heat with the battery cell 10 by means of the first protrusion 222. The first protrusion 222 of the first plate 22 can be formed by means of stamping, and after stamping, the second recess 223 is formed on the side of the first plate 22 facing the second plate 23, and the first recess 211 is formed on the side of the first plate 22 facing away from the second plate 23. In the embodiment, a forming process of the thermal management component 20 can be simplified.

In some embodiments, the first protrusion 222 surrounds an outer side of the first recess 211.

In some embodiments, the battery cell 10 is connected to the second surface 20b. The avoidance structure 21 further includes a third recess 212, where the third recess 212 is recessed from the second surface 20b in a direction close to the first surface 20a, and the third recess 212 is configured to provide a space for expansion of the battery cell 10 connected to the second surface 20b.

The battery cell 10 connected to the second surface 20b is located on the side of the second surface 20b facing away from the first surface 20a. The battery cell 10 connected to the second surface 20b and the battery cell 10 connected to the first surface 20a are different battery cells and are arranged on two sides of the thermal management component in the first direction X, respectively.

One or more third recesses 212 may be provided.

The third recess 212 may provide a space for expansion of one battery cell 10 connected to the second surface 20b, or may provide a space for expansion of a plurality of battery cells 10 connected to the second surface 20b.

The first recess 211 can provide the space for expansion of the battery cell 10 connected to the first surface 20a, and the third recess 212 can provide the space for expansion of the battery cell 10 connected to the second surface 20b, thereby reducing pressure between the battery cell 10 and the thermal management component 20, reducing the risk of breakage of the thermal management component 20, improving the cycling performance of the battery cell 10, and improving the safety.

In some embodiments, a projection of a bottom surface 211a of the first recess in the first direction X at least partially overlaps a projection of a bottom surface 212a of the third recess in the first direction X.

In some embodiments, the projection of the bottom surface 211a of the first recess in the first direction X completely coincides with the projection of the bottom surface 212a of the third recess in the first direction X. In the embodiment, the first recess 211 and the second recess 223 are oppositely arranged in the first direction X, such that the uniformity of force on the battery cells 10 located on two sides of the thermal management component 20 can be improved.

In some embodiments, the second plate 23 includes a second main body 231 and a second protrusion 232, where the second protrusion 232 protrudes from a surface of the second main body 231 facing away from the first plate 22, a fourth recess 233 is provided on the side of the second plate 23 facing the first plate 22, and the fourth recess 233 is formed in the position on the second plate 23 corresponding to the second protrusion 232. The second recess 223 and the fourth recess 233 are oppositely arranged and form a flow channel 24 for the heat exchange medium to flow. The second surface 20b includes an end surface of the second protrusion 232 away from the second main body 231, and the second protrusion 232 and the second plate 23 from the third recess 212.

In some embodiments, the avoidance structure further 21 includes a first through hole 213, where the first through hole 213 extends from the bottom surface 211a of the first recess to the bottom surface 212a of the third recess, so as to communicate the first recess 211 with the third recess 212.

One or more first through holes 213 may be provided. The first through hole 213 may be a circular hole, a square hole, a racetrack-shaped hole, or a hole of other shapes.

In the embodiment, the first through hole 213 is provided, such that the avoidance space can be further increased, and a difference in expansion of the battery cells 10 on two sides of the thermal management component 20 can be balanced. As an example, if the expansion of a certain battery cell 10 connected to the first surface 20a is too large, an expanded portion of the battery cell 10 may enter the second recess 223 via the first through hole 213.

In some embodiments, the first through hole 213 penetrates the first main body 221 and the second main body 231.

In some embodiments, the thermal management component 20 is internally provided with a flow channel 24 for the heat exchange medium to flow, and the flow channel 24 surrounds the avoidance structure 21. The heat exchange medium can effectively exchange heat with the battery cell 10, thereby improving the heat exchange efficiency. As an example, the flow channel 24 includes the second recess 223 and the fourth recess 233.

FIG. 8 is a schematic sectional view of a thermal management component 20 of a battery according to some other embodiments of the present application.

As shown in FIG. 8, the avoidance structure further includes a first through hole 213, where the first through hole 213 extends from a bottom surface 211a of the first recess to the second surface 20b.

In the embodiment, the second recess 223 may be omitted.

When the battery cell connected to the second surface 20b expands, an expanded portion of the battery cell may enter the first recess 211 via the first through hole 213. In other words, the first recess 211 can also provide the space for expansion of the battery cell connected to the second surface 20b, so as to reduce pressure between the battery cell and the thermal management component 20, reduce the risk of breakage of the thermal management component 20, improve the cycling performance of the battery cell, and improve the safety.

In some embodiments, the thermal management component 20 includes a first plate 22 and a second plate 23 that are arranged in the first direction X, where the first plate 22 includes a first main body 221 and a first protrusion 222, the first protrusion 222 protrudes from a surface of the first main body 221 facing away from the second plate 23, a second recess 223 is provided on the side of the first plate 22 facing the second plate 23, the second recess 223 is formed at the position on the first plate 22 corresponding to the first protrusion 222, and the second recess 223 is configured to allow the heat exchange medium to flow. The first surface 20a includes an end surface of the first protrusion 222 away from the first main body 221, and the first protrusion 222 and the first plate 22 form the first recess 211. The second plate 23 is flat.

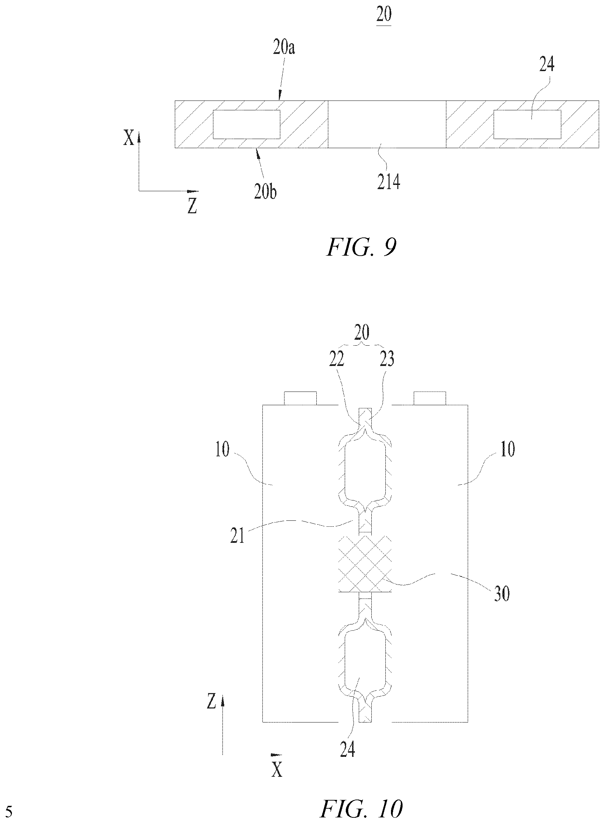

FIG. 9 is a schematic sectional view of a thermal management component 20 of a battery according to some other embodiments of the present application.

As shown in FIG. 9, the avoidance structure includes a second through hole 214, where the second through hole 214 extends from the first surface 20a to the second surface 20b, so as to penetrate the thermal management component 20.

One or more second through holes 214 may be provided.

The second through hole 214 can provide a space for expansion of the battery cell connected to the first surface 20a and a space for expansion of the battery cell connected to the second surface 20b, thereby reducing pressure between the battery cell and the thermal management component 20, reducing the risk of breakage of the thermal management component 20, improving the cycling performance of the battery cell, and improving the safety.

In some embodiments, the thermal management component 20 is of an integrally formed structure.

FIG. 10 is a partial schematic sectional view of a battery according to some other embodiments of the present application.

As shown in FIG. 10, in some embodiments, the battery further includes a thermal insulator 30, where at least part of the thermal insulator 30 is accommodated in the avoidance structure 21, and the thermal insulator 30 has a thermal conductivity less than that of the thermal management component 20.

The thermal insulator 30 may be entirely accommodated in the avoidance structure 21, or may be only partially accommodated in the avoidance structure 21.

The thermal insulator 30 may be connected to the battery cell 10, or may be connected to the thermal management component 20.

When the battery cell 10 connected to the thermal management component 20 is in a state of thermal runaway, the thermal insulator 30 can function as thermal insulation protection to prevent rapid diffusion of heat, so as to reduce safety risks.

In some embodiments, the thermal insulator 30 has a Young's modulus less than that of the thermal management component 20.

The thermal insulator 30 has a better elasticity than the thermal management component 20. When the battery cell 10 expands and is pressed against the thermal insulator 30, the thermal insulator 30 can be compressed to provide a space for expansion of the battery cell 10, thereby reducing force on the battery cell 10, and improving the cycling performance of the battery cell 10.

In some embodiments, a material of the thermal insulator 30 includes at least one of aerogel, a glass fiber and a ceramic fiber.

In some embodiments, the thermal insulator 30 is fixed to the battery cell 10. Optionally, the thermal insulator 30 is fixed to the battery cell 10 by means of bonding.

The thermal insulator 10 can be fixed to the battery cell 30, so as to reduce shaking of the thermal insulator 30 in the avoidance structure 21, and reduce the risk of dislocation of the thermal insulator 30.

In some embodiments, the thermal insulator 30 is arranged separated from the thermal management component 20.

A gap is provided between the thermal management component 20 and the thermal insulator 30, such that the thermal insulator 30 is not in contact with the thermal management component 20.

The thermal insulator 30 is arranged separated from the thermal management component 20, so as to reduce heat transfer between the thermal insulator 30 and the thermal management component 20 and reduce heat loss.

In some embodiments, the thermal insulator 30 is located between adjacent battery cells 10.

The thermal insulator 30 can reduce heat transfer between the battery cells 10 and reduce the influence of the battery cells 10 on each other. When a certain battery cell 10 is in a state of thermal runaway, the thermal insulator 30 can reduce the heat conducted to the normal battery cell 10 adjacent to the battery cell 10, thereby reducing the risk of thermal runaway of the normal battery cell 10.

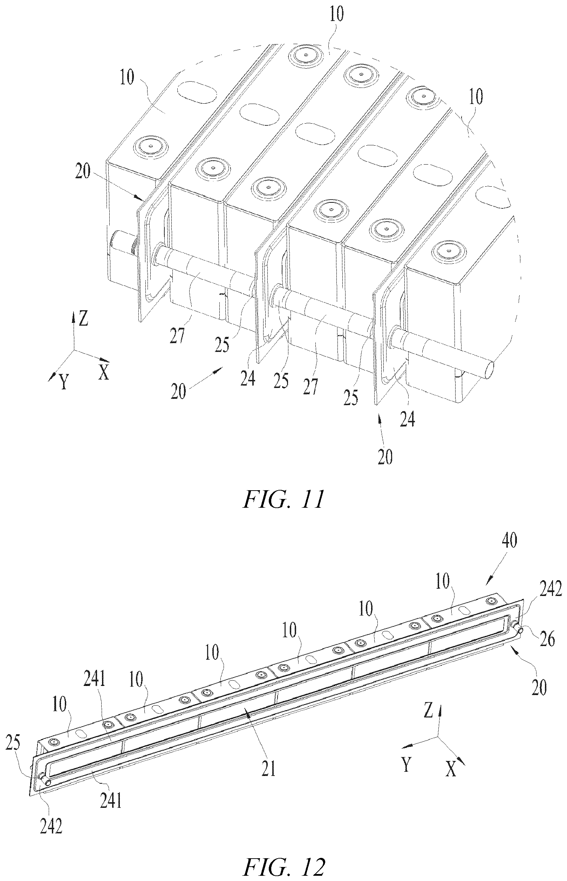

FIG. 11 is a schematic enlarged view of the battery 2 shown in FIG. 3 at circle B; and FIG. 12 is a schematic structural diagram of a battery unit 40 and a thermal management component 20 of a battery 2 according to some embodiments of the present application.

As shown in FIGS. 3, 11, and 12, in some embodiments, the thermal management component 20 includes a first interface 25, a second interface 26, and the flow channel 24 communicating the first interface 25 with the second interface 26.

One or more first interfaces 25 may be provided. One or more second interfaces 26 may be provided.

The heat exchange medium can flow into the flow channel 24 through the first interface 25 and flow out thereof through the second interface 26. When flowing through the flow channel 24, the heat exchange medium exchanges heat with the battery cell 10, so as to adjust the temperature of the battery cell 10.

In some embodiments, a plurality of thermal management components 20 are provided, and the plurality of thermal management components 20 are arranged in the first direction X. The battery cell 10 is arranged between adjacent thermal management components 20. The flow channels 24 of the plurality of thermal management components 20 are in communication with each other.

One battery cell 10 or a plurality of battery cells 10 may be arranged between adjacent thermal management components 20.

The flow channels 24 of the plurality of thermal management components 20 may be in series connection or parallel connection or series-parallel connection. The series-parallel connection means that some of the flow channels 24 of the plurality of thermal management components 20 are in series connection and the rest are in parallel connection.

The plurality of thermal management components 20 may exchange heat with the plurality of battery cells 10, so as to improve the uniformity of temperatures of the plurality of battery cells 10. The flow channels 24 of the plurality of thermal management components 20 are in communication with each other, and the heat exchange medium can flow between the plurality of thermal management components 20.

In some embodiments, the first interfaces 25 of the plurality of thermal management components 20 are in communication with each other, and the second interfaces 26 of the plurality of thermal management components 20 are in communication with each other, such that the flow channels 24 of the plurality of thermal management components 20 are in parallel connection.

The first interfaces 25 of the plurality of thermal management components 20 may be in direct communication with each other or may be in communication with each other by means of pipelines. The second interfaces 26 of the plurality of thermal management components 20 may be in direct communication with each other, or may be in communication with each other by means of pipelines.

The flow channels 24 of the plurality of thermal management components 20 are in parallel connection, such that a temperature difference of the heat exchange medium in the flow channels 24 of the plurality of thermal management components 20 can be reduced, and the uniformity of temperatures of the plurality of battery cells 10 can be improved.

In some embodiments, the first interfaces 25 of adjacent thermal management components 20 are in communication with each other by means of a connecting pipe 27, and the second interfaces 26 of adjacent thermal management components 20 are in communication with each other by means of a connecting pipe 27.

In some embodiments, all the first interfaces 25, all the second interfaces 26, and all the connecting pipes 27 are substantially in the same plane (or substantially at the same height in a third direction Z), which can maximize space utilization and reduce heat loss between the thermal management components 20.

In some embodiments, at least one of the thermal management components 20 is provided with two first interfaces 25 and two second interfaces 26, the two first interfaces 25 are located on two sides of the flow channel 24 in the first direction X, respectively, and the two second interfaces 26 are located on the two sides of the flow channel 24 in the first direction X, respectively.

The two first interfaces 25 of a certain thermal management component 20 may be in communication with the thermal management components 20 located on two sides of the thermal management component 20, respectively, and the two second interfaces 26 of the thermal management component 20 may be in communication with the thermal management components 20 located on the two sides of the thermal management component 20, respectively. In the embodiment, a connection structure between the plurality of thermal management components 20 can be simplified.

In some embodiments, the two first interfaces 25 of the thermal management component 20 are opposite each other in the first direction X, and the two second interfaces 26 of the thermal management component 20 are opposite each other in the first direction X.

In some embodiments, each thermal management component 20 is provided with two first interfaces 25 and two second interfaces 26.

In some embodiments, the first interface 25 and the second interface 26 are in communication with two ends of the flow channel 24 in the second direction Y, respectively, with the second direction Y being perpendicular to the first direction X.

In the embodiment, a flow path of the heat exchange medium in the flow channel 24 can be shortened, so as to reduce a temperature difference between the heat exchange medium at the first interface 25 and the heat exchange medium at the second interface 26, and improve the uniformity of temperatures of the battery cells 10.

In some embodiments, the flow channel 24 is annular and includes two heat exchange sections 241 and two confluence sections 242, where the two heat exchange sections 241 extend in the second direction Y, and the two confluence sections 242 are arranged in the second direction Y. One of the confluence sections 242 is connected to ends of the two confluence sections 242 close to the first interface 25 and is in communication with the first interface 25; and the other confluence section 242 is connected to ends of the two confluence sections 242 close to the second interface 26 and is in communication with the second interface 26.

In some embodiments, the battery 2 includes a plurality of battery units 40 arranged in the first direction X, where each of the battery units 40 includes the plurality of battery cells 10 arranged in the second direction Y, with the second direction Y being perpendicular to the first direction X. The thermal management component 20 is arranged between at least two adjacent battery units 40.

In the embodiment, the thermal management component 20 exchanges heat with the plurality of battery cells 10 of the battery unit 40, so as to improve the heat exchange efficiency, improve the uniformity of temperatures of the plurality of battery cells 10 of the battery unit 40, reduce the number of thermal management components 20, simplify a structure of the battery 2, and increase the energy density of the battery 2.

In some embodiments, the avoidance structure 21 is located between adjacent battery units 40 and is configured to provide a space for expansion of the plurality of battery cells 10 of the battery unit 40.

One avoidance structure 21 may be provided, and one avoidance structure 21 provides a space for expansion of the plurality of battery cells 10 of the battery unit 40.

A plurality of avoidance structures 21 may also be provided, and the plurality of avoidance structures 21 are arranged at intervals in the first direction X and are configured to provide spaces for expansion of the plurality of battery cells 10 of the battery unit 40. Optionally, the number of avoidance structures 21 is the same as the number of battery cells 10 of the battery unit 40, and the plurality of avoidance structures 21 correspond to the plurality of battery cells 10 of the battery unit 40 on a one to one basis.

The avoidance structure 21 may provide an expansion space only for the plurality of battery cells 10 of the battery unit 40 on one side of the thermal management component 20, or may provide an expansion space for the plurality of battery cells 10 of the battery units 40 on two sides of the thermal management component 20.

The avoidance structure 21 can provide the space for expansion of the plurality of battery cells 10 of the battery unit 40, thereby reducing pressure between the plurality of battery cells 10 and the thermal management component 20, reducing the risk of breakage of the thermal management component 20, reducing a difference in force on the plurality of battery cells 10 of the battery unit 40, and improving the cycling performance of the battery cells 10.

In some embodiments, one avoidance structure 21 is provided to simplify the forming process of a thermal management component 20.

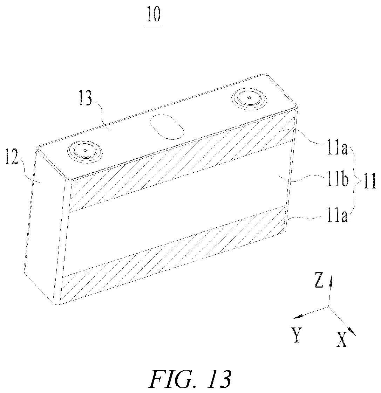

FIG. 13 is a schematic structural diagram of a battery cell 10 of a battery according to some embodiments of the present application.

As shown in FIGS. 12 and 13, the battery cell 10 includes two third surfaces 11 arranged opposite each other in the first direction X and two fourth surfaces 12 arranged opposite each other in the second direction Y, where the third surface 11 has an area greater than that of the fourth surface 12, and the first direction X is perpendicular to the second direction Y. The thermal management component is configured to exchange heat with the third surface 11 of the battery cell 10.

Heat exchange between the thermal management component and the third surface 11 of the battery cell 10 having a larger area can increase a heat exchange area between the thermal management component and the battery cell 10, and improve the heat exchange efficiency.

Optionally, the third surface 11 and the fourth surface 12 are both planar.

In some embodiments, the battery cell 10 further includes two fifth surfaces 13 arranged opposite each other in the third direction Z, and the third surface 11 has an area greater than that of the fifth surface 13. Optionally, the fifth surface 13 is planar.

A heat exchange area between the thermal management component and the third surface 11 is S1, the third surface 11 has an area of S2, and S1/S2 ≥ 0.2.

The third surface 11 is provided with a first region 11a and a second region 11b, and the first region 11a is configured for connecting to the thermal management component 20, so as to exchange heat with the thermal management component 20. The second region 11b is configured to be opposite the avoidance structure 21, and is not in contact with the thermal management component 20.

One or more first regions 11a may be provided. As an example, a total area of the first region 11a may be a heat exchange area between the thermal management component 20 and the third surface 11.

As an example, the first region 11a may directly abut against the thermal management component 20, or may be bonded to the thermal management component 20 by means of an thermally conductive adhesive.

The smaller a value of S1/S2 is, the lower heat exchange efficiency between the thermal management component 20 and the battery cell 10 is. In the embodiment of the present application, S1/S2 ≥ 0.2, such that the heat exchange efficiency between the thermal management component and the battery cell 10 satisfies the requirements, and the cycling performance of the battery cell 10 is improved.

Optionally, S1/S2 ≥ 0.5.

In some embodiments, two first regions 11a are provided, and the two first regions 11a are located on two sides of the second region 11b, respectively.

The second region 11b is located in the middle of the third surface 11, and the degree of expansion deformation of the second region is greater than that of the first region 11a. In the embodiment of the present application, the second region 11b is opposite the avoidance structure 21, so as to reduce pressure between the thermal management component 20 and the battery cell 10.

According to some embodiments of the present application, the present application further provides a power consuming device. The power consuming device includes a battery according to any one of the above embodiments, where the battery is configured to provide electrical energy for the power consuming device. The power consuming device may be any one of the above apparatuses or systems using the battery.

According to some embodiments of the present application, referring to FIGS. 3-7, the battery 2 includes a plurality of battery units 40 and a plurality of thermal management components 20, where the plurality of battery units 40 and the plurality of thermal management components 20 are arranged in the first direction X. Each battery unit 40 includes a plurality of battery cells 10 arranged in the second direction Y, with the second direction Y being perpendicular to the first direction X. The battery unit 40 is arranged between adjacent thermal management components 20.

The thermal management component 20 is configured to exchange heat with the plurality of battery cells 10 of the battery unit 40, so as to adjust the temperature of the plurality of battery cells 10 of the battery unit 40. The thermal management component 20 is provided with the flow channel 24 for the heat exchange medium to flow, and the flow channels 24 of the plurality of thermal management components 20 are in parallel connection.

The thermal management component 20 is provided with the avoidance structure 21, and the avoidance structure 21 is located between adjacent battery units 40 and is configured to provide a space for expansion of the plurality of battery cells 10 of the battery unit 40. The avoidance structure 21 includes an opening structure located in the middle of the thermal management component 20 and penetrating the thermal management component 20.

It should be noted that the embodiments in the present application and features in the embodiments may be combined with each other without conflicts.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery, comprising:
a battery cell; and
a thermal management component configured to exchange heat with the battery cell, wherein the thermal management component is provided with an avoidance structure, and the avoidance structure is configured to provide a space for expansion of the battery cell.

2. The battery according to claim 1, wherein a plurality of battery cells are provided, and at least part of the avoidance structure is located between two adjacent battery cells and is configured to provide a space for expansion of at least one of the battery cells.

3. The battery according to claim 2, wherein the avoidance structure is configured to provide a space for expansion of the battery cells located on two sides of the thermal management component and adjacent to the thermal management component.

4. The battery according to any one of claims 1-3, wherein the thermal management component further comprises a first surface and a second surface that are arranged facing away from each other in a first direction, the battery cell being connected to the first surface.

5. The battery according to claim 4, wherein the avoidance structure comprises a first recess, the first recess being recessed from the first surface in a direction close to the second surface, and the first recess being configured to provide a space for expansion of the battery cell connected to the first surface.

6. The battery according to claim 5, wherein the thermal management component comprises a first plate and a second plate that are arranged in the first direction, and wherein the first plate comprises a first main body and a first protrusion, the first protrusion protrudes from a surface of the first main body facing away from the second plate, a second recess is provided on the side of the first plate facing the second plate, the second recess is formed at the position on the first plate corresponding to the first protrusion, and the second recess is configured to allow a heat exchange medium to flow; and
the first surface comprises an end surface of the first protrusion away from the first main body, and the first protrusion and the first main body form the first recess.

7. The battery according to claim 5 or 6, wherein the battery cell is connected to the second surface; and
the avoidance structure further comprises a third recess, the third recess being recessed from the second surface in a direction close to the first surface, and the third recess being configured to provide a space for expansion of the battery cell connected to the second surface.

8. The battery according to claim 7, wherein a projection of a bottom surface of the first recess in the first direction at least partially overlaps a projection of a bottom surface of the third recess in the first direction.

9. The battery according to claim 8, wherein the projection of the bottom surface of the first recess in the first direction completely coincides with the projection of the bottom surface of the third recess in the first direction.

10. The battery according to claim 8 or 9, wherein the avoidance structure further comprises a first through hole, the first through hole extending from the bottom surface of the first recess to the bottom surface of the third recess, so as to communicate the first recess with the third recess.

11. The battery according to claim 5 or 6, wherein the avoidance structure further comprises a first through hole, the first through hole extending from a bottom surface of the first recess to the second surface.

12. The battery according to claim 4, wherein the avoidance structure comprises a second through hole, the second through hole extending from the first surface to the second surface, so as to penetrate the thermal management component.

13. The battery according to any one of claims 1-12, wherein the thermal management component is internally provided with a flow channel for the heat exchange medium to flow, and the flow channel surrounds the avoidance structure.

14. The battery according to any one of claims 1-13, further comprising a thermal insulator, wherein at least part of the thermal insulator is accommodated in the avoidance structure, and the thermal insulator has a thermal conductivity less than that of the thermal management component.

15. The battery according to claim 14, wherein the thermal insulator has a Young's modulus less than that of the thermal management component.

16. The battery according to claim 14 or 15, wherein a material of the thermal insulator comprises at least one of aerogel, a glass fiber and a ceramic fiber.

17. The battery according to any one of claims 14-16, wherein the thermal insulator is fixed to the battery cell.

18. The battery according to claim 17, wherein the thermal insulator is arranged separated from the thermal management component.

19. The battery according to any one of claims 14-18, wherein the thermal insulator is located between adjacent battery cells.

20. The battery according to any one of claims 1-19, comprising a plurality of battery units arranged in the first direction, wherein each of the battery units comprises the plurality of battery cells arranged in a second direction perpendicular to the first direction;
the thermal management component is arranged between at least two adjacent battery units; and
the avoidance structure is located between adjacent battery units and is configured to provide a space for expansion of the plurality of battery cells of the battery unit.

21. The battery according to any one of claims 1-20, wherein
the battery cell comprises two third surfaces arranged opposite each other in the first direction and two fourth surfaces arranged opposite each other in the second direction, and wherein the third surface has an area greater than that of the fourth surface, and the first direction is perpendicular to the second direction; and
the thermal management component is configured to exchange heat with the third surface of the battery cell.

22. The battery according to claim 21, wherein a heat exchange area between the thermal management component and the third surface is S1, the third surface has an area of S2, and S1/S2 ≥ 0.2.

23. A power consuming device, comprising a battery according to any one of claims 1-22, wherein the battery is configured to provide electrical energy.
